# EUROPEAN PATENT APPLICATION

(11) **EP 3 378 331 A1**
(43) Date of publication of application: **26.09.2018**
(21) Application number: 17161977.8
(22) Date of filing: 21.03.2017
(51) Int. Cl.: A23L 5/10, A23L 7/10, A23L 7/143, A23L 7/148, A23L 7/196, A23L 11/00, A47J 36/16, B01F 7/18

(54) **METHOD AND APPARATUS FOR COOKING STARCH-CONTAINING FOODS**

(71) Applicant: Koninklijke Philips N.V., 5656 AE Eindhoven (NL)
(72) Inventor: WANG, Yanyan, 5656 AE Eindhoven (NL)
(74) Representative: de Haan, Poul Erik

(57) **Abstract**

There is provided an apparatus (100, 200) and method (300) of cooking starch-containing foods having a fibre containing outer layer. The starch-containing foods are milled (306) to at least partially remove the fibre containing outer layer from the starch-containing food to form a mixture of debris from the partially removed fibre containing outer layer and milled starch-containing food. The mixture of debris from the partially removed fibre containing outer layer and milled starch-containing food is then cooked (308) in situ.

## Description

### TECHNICAL FIELD OF THE INVENTION

The invention relates to a method and an apparatus for cooking starch-containing foods, for example grains and legumes, such as a table-top domestic cooker such as may be used for cooking rice.

### BACKGROUND TO THE INVENTION

The health and nutritional benefits of eating starchy foods which are also high in fibre is well established. In particular, it is known that eating so-called wholegrain foods, such as brown rice, is an effective way to reduce the risk of diabetes and control weight gain as the fibre-rich bran layer of the grain leads to feelings of satiety sooner when consumed, translating to smaller meal portions. The fibre-rich outer or bran layer also contributes to healthy bowel function as it facilitates the digestive processes. In addition, wholegrains and legumes are rich in essential minerals such as selenium and manganese, as well as antioxidants.

When compared to white, or polished rice, which has had the bran layer removed, cooking of wholegrain or brown rice requires a longer cooking time and does not result in the enjoyable taste and texture of cooked white rice. Fibre-rich staple foods, normally considered as tough, less chewable and tasteless, are not attractive for consumers. However, it is not possible in a domestic situation to cook such foods in a way to enjoy the benefits of "whole grain" nutrition and the taste and texture of processed foods.

Thus, there is a need for an improved apparatus and method for cooking starch-containing foods such as grains and legumes.

### SUMMARY OF THE INVENTION

As noted above, a limitation of existing methods and apparatus is that it is not possible to cook starchy foods such as whole grains or legumes having a fibre containing outer layer while achieving the taste and texture of a processed food.

Therefore, according to an aspect of the invention, there is provided a method of cooking starch-containing food comprising:
milling starch-containing food having a fibre containing outer layer to at least partially remove the fibre containing outer layer from the starch-containing food to form a mixture of debris from the at least partially removed fibre containing outer layer and the milled starch-containing food; and
cooking the mixture of debris from the at least partially removed fibre containing outer layer and the milled starch-containing food.

In some embodiments, the method further comprises a soaking step in which the starch-containing food is soaked in water prior to the milling step.

In some embodiments, the starch-containing food comprises grains or legumes.

In some embodiments, the method may be performed in a cooking apparatus.

In some embodiments, the milling step is implemented by a milling tool comprised in the cooking apparatus.

In some embodiments, the milling step comprises rotating the milling tool about a drive shaft of the cooking apparatus at a speed of less than 200 rpm.

In some embodiments, the cooking apparatus may comprise a cooking pot in which the mixture of debris from the at least partially removed fibre containing outer layer and milled starch-containing food is formed and cooked.

In some embodiments, cooking the mixture of debris from the at least partially removed fibre containing outer layer and milled starch-containing food comprises one or more of steaming, boiling or braising.

In some embodiments, the steps of milling and cooking may be carried out in the same water in which the starch-containing food was soaked.

According to an aspect of the invention, there is provided an apparatus for cooking starch-containing food, comprising:
a cooking pot; and
a milling tool provided in the cooking pot, the milling tool being operative to at least partially remove a fibre containing outer layer from starch-containing food and form a mixture of debris from the at least partially removed fibre containing outer layer and milled starch-containing food;
wherein the apparatus is configured to form and cook the mixture of debris from the at least partially removed fibre containing outer layer and milled starch-containing food in the cooking pot.

In some embodiments, the milling tool may be rotatable about a drive shaft.

In some embodiments, the milling tool position within the cooking pot may be adjustable vertically and/or horizontally.

In some embodiments, the milling tool may comprise a flat plate or a blade.

In some embodiments, the apparatus may further comprise a control unit for controlling one or more of the following operational parameters:
soaking time;
soaking temperature;
rotational speed of the milling tool;
milling time;
vertical and horizontal movement of the milling tool;
cooking time;
cooking temperature.

According to an aspect of the invention, there is provided a computer program product comprising a computer readable medium having computer readable code embodied therein, the computer readable code being configured such that, on execution by a control unit of a cooking apparatus configured to form and cook a mixture of debris from an at least partially removed fibre containing outer layer and milled starch-containing food from starch-containing food having a fibre containing outer layer in a cooking pot of the cooking apparatus, the control unit is caused to perform the method of the first aspect.

According to the aspects and embodiments described above, the limitations of existing methods and apparatus are addressed. For example, it is possible in a domestic situation to partially mill starch-containing foods having a fibre-containing outer layer to be cooked, and then cook the milled starch-containing food in a mixture with debris from the partially removed fibre-containing outer layer. In this way, it is now possible in the home to enjoy the nutritional benefits of starchy foods such as whole grains and legumes while having the taste and texture of processed foods.

There is thus provided an improved apparatus and method for cooking starch-containing foods such as grains and legumes, which overcome the existing problems.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a block diagram of an apparatus according to an embodiment;
Figure 2a shows an example apparatus according to an embodiment;
Figure 2b shows a milling tool of an apparatus according to an embodiment;
Figure 2c shows a sectional view of a milling tool of an apparatus according to an embodiment;
Figure 3 is a flow chart illustrating a method of operating an apparatus to cook starch-containing foods according to an embodiment; and
Figure 4 shows photos of brown rice before and after cooking, either with or without milling.

### DETAILED DESCRIPTION OF THE PREFERRED EMBODIMENTS

Conventional rice cookers, such as domestic rice cookers provide a cooking pot in which starchy foods such as grains, or legumes, are to be cooked. However, this does not allow a user to cook the unprocessed starch-containing food in a manner which results in the nutritional benefits of eating the fibre-rich outer layer, while enjoying the taste and texture of the inner part of the starch-containing food. As noted above, the invention provides an improved apparatus and method, which overcome the existing problems.

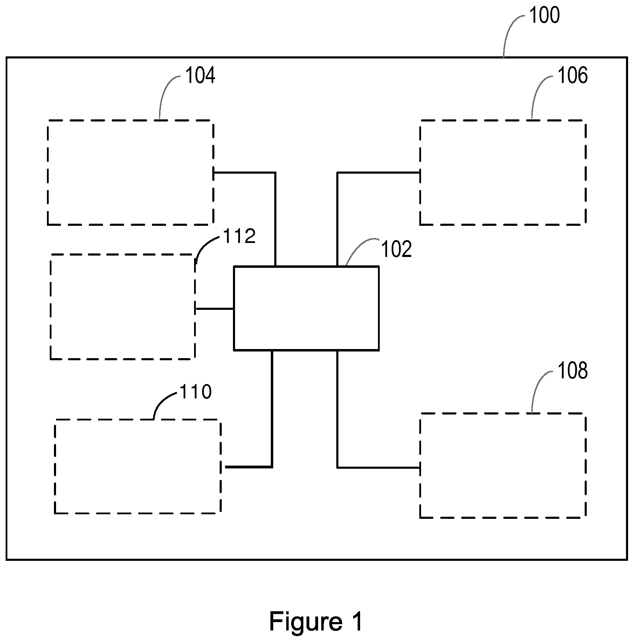

Figure 1 shows a block diagram of an apparatus 100 according to an embodiment that can be used for cooking starch-containing food.

Generally, the apparatus 100 may comprise a table-top domestic appliance, such as a rice cooker and has as its components those usually found in such an appliance. In an embodiment, the apparatus 100 comprises a cooking pot in which the starch-containing food is milled and cooked. The apparatus 100 may further comprise a lid or cover to seal the cooking pot during the cooking process.

The apparatus 100 comprises a control unit 102 that controls the operation of the apparatus 100 and that can implement the method described herein. The control unit 102 can comprise one or more processors, control units, multi-core processors or modules that are configured or programmed to control the apparatus 100 in the manner described herein. In particular implementations, the control unit 102 can comprise a plurality of software and/or hardware modules that are each configured to perform, or are for performing, individual or multiple steps of the method according to embodiments of the invention.

Briefly, the control unit 102 of the apparatus 100 is configured to control the operating of the heating element 110 and the milling tool 112 of the apparatus, as will be described later.

Returning back to the illustrated embodiment of Figure 1, in this illustrated embodiment, the apparatus 100 comprises the user interface 104 that is controlled by the control unit 102. Alternatively, the user interface 104 maybe external to (i.e. separate to or remote from) the apparatus 100. For example, the user interface 104 maybe part of another device. The user interface 104 allows a user to program and operate the apparatus 100, for example to perform one or more of a pre-soaking step, a milling step and a cooking step.

The user interface 104 may also be for use in providing the user of the apparatus 100 with information resulting from the method according to the invention. The control unit 102 maybe configured to control the user interface 104 to provide information resulting from the method according to the invention. For example, in some embodiments, the control unit 102 of the apparatus 100 maybe configured to control the user interface 104 to render (or output) information associated with one or more actions initiated by the control unit 102, for example an output when a particular step of the method is complete.

The user interface 104 may also be configured to receive a user input. In other words, a user interface 104 may allow the user to manually enter data, instructions, or information, such as temperature and duration of a particular step of the method, or a particular rotational speed of milling tool 112.

Thus, the user interface 104 maybe or may comprise any component that enables rendering or output of information, data or signals to the user. Alternatively or in addition, the user interface 104 may be or may comprise any component that enables the user to provide a user input, interact with and/or control the apparatus 100. For example, the user interface 104 may comprise one or more switches, one or more buttons, a keypad, a keyboard, a touch screen or an application (for example, on a tablet or smartphone), a display screen or any other visual rendering component, one or more lights, one or more speakers or any other audio rendering component, or any other user interface component, or combination of user interface components.

In some embodiments (such as the illustrated embodiment of Figure 1), the apparatus 100 may comprise a memory unit 106 configured to store program code that can be executed by the control unit 102 to perform the method described herein. The memory unit 106 can also be used to store information, data, signals and measurements made or acquired by the control unit 102 of the apparatus 100 or by components, interfaces, units, and devices that are external to the apparatus 100. Thus, for example, the memory unit 106 of the apparatus 100 maybe configured to store one or more actions to pre-soak, mill and cook, and the control unit 102 may be configured to acquire at least one action from the memory unit 106 to initiate such actions.

Returning back to Figure 1, in some embodiments, the apparatus 100 may also comprise a communications interface (or circuitry) 108 for enabling the apparatus 100 to communicate with (or connect to) any components, interfaces, units, and devices that are internal or external to the apparatus 100, such as heating element 110 or milling tool 112. The communications interface 108 may communicate with any components, interfaces units, and devices wirelessly or via a wired connection. For example, in embodiments where the user interface 104 is external to the apparatus 100, the communications interface 108 may communicate with the external user interface wirelessly or via a wired connection. Similarly, in embodiments where one or more memory units 106 are external to the apparatus 100, the communications interface 108 may communicate with the external memory units wirelessly or via a wired connection.

Returning to Figure 1, apparatus 100 comprises heating element 110, which is in thermal contact with a cooking pot of the apparatus (not shown). The heating element may be any type of heating element as is usually found in such appliances, and is controlled by control unit 102 to establish a predetermined temperature in the cooking pot, based on user input or a program stored in the memory unit 106. Different types of heating elements are known in the art and need no further discussion.

The operation of the heating element 110 allows heat to be provided to a cooking pot of the apparatus (not shown in Figure 1) at any stage of the methods described herein. For example, the control unit 102 may control the heating element in order control the soaking temperature for an initial and optional soaking step, or the temperature of a milling step, or the temperature of a cooking step.

For example, the control unit 102 may control the heating element 110 to heat the cooking pot to a temperature of less than 60 °C in an initial, optional, soaking step in water, to soften the fibre-rich outer layer of the starch-containing food before milling. In one embodiment, the control unit 102 may control the heating element 110 to heat the cooking pot to a temperature of less than 50 °C in an initial, optional, soaking step in water, for example less than 40 °C, for example less than 30 °C, for example about 25 °C. In one embodiment, the control unit 102 may control the heating element 110 to heat the cooking pot to a temperature of greater than 25 °C in an initial soaking step in water, for example greater than 30 °C, for example greater than 40 °C, for example greater than 50 °C, for example about 60 °C.

In one embodiment, the control unit 102 may control the heating element to provide a temperature as described above for a soaking step for a period of at least 5 minutes, for example at least 10 minutes, for example at least 15 minutes, for example about 20 minutes. In one embodiment, the control unit 102 may control the heating element to provide a temperature as described above for a soaking step for a period of less than 20 minutes, for example less than 15 minutes, for example less than 10 minutes, for example about 5 minutes. It will be understood that a higher soaking temperature will require a shorter soaking time, while a lower soaking temperature will require a longer soaking time.

In another embodiment, the control unit 102 may control the heating element 110 to heat the cooking pot to a temperature of less than 60 °C in a milling step, for example less than less than 50 °C, for example less than 40 °C, less than 30 °C, for example about 25 °C. In one embodiment, the control unit 102 may control the heating element 110 to heat the cooking pot to a temperature of greater than 25 °C in a milling step, for example greater than 30 °C, greater than 40 °C, for example greater than 50 °C, for example about 60 °C. In one embodiment, the control unit 102 may control the heating element 110 to heat the cooking pot to a temperature in the range of 25 to 30 °C in a milling step.

In an embodiment in which the control unit 102 heats the cooking pot for a soaking step to a temperature of greater than the temperature required for the milling step, the control unit 102 may control the heating element to cool the cooking pot to the required temperature for the milling step.

In one embodiment, the control unit 102 may control the heating element to provide a temperature as described above for a milling step for a period of at least 30 seconds, for example at least 40 seconds, for example at least 50 seconds, for example at least 60 seconds, for example at least 90 seconds, for example about 2 minutes. In one embodiment, the control unit 102 may control the heating element to provide a temperature as described above for a milling step for a period of less than 2 minutes, for example less than 90 seconds, for example less than 60 seconds, for example less than 50 seconds, for example less than 40 seconds, for example about 30 seconds. It will be understood that a longer milling period will result in a greater degree of removal of the fibre containing outer layer from the starch-containing food, while a shorter milling period will result in a lesser degree of removal.

In another embodiment, the control unit 102 may control the heating element 110 to heat the cooking pot to 1 temperature of no less than 50 °C in a cooking step, for example no less than 60 °C, for example no less than 70 °C, no less than 80 °C, no less than 90 °C, no less than 100 °C. In one embodiment, the control unit 102 may control the heating element 110 to heat the cooking pot to a temperature of less than 100 °C in a cooking step, for example less than 90 °C, less than 80 °C, for example less than 70 °C, for example less than 60 °C.

In one embodiment, the control unit 102 may control the heating element to provide a temperature as described above for a cooking step for a period of at least 20 minutes, for example at least 21 minutes, for example at least 22 minutes, for example at least 23 minutes, for example at least 24 minutes, for example at least 25 minutes, for example about 30 minutes. In one embodiment, the control unit 102 may control the heating element to provide a temperature as described above for a cooking step for a period of less than 30 minutes, for example less than 25 minutes, for example less than 24 minutes, for example less than 23 minutes, for example less than 22 minutes, for example less than 21 minutes, for example about 20 minutes. It will be understood that a higher cooking temperature will require a shorter cooking time, while a lower cooking temperature will require a longer cooking time.

In one embodiment, the control unit 102 may control the heating element 110 to provide a first temperature for a first time period of a cooking program, before controlling the heating element 110 to provide a second temperature for a second time period of a cooking program. In one embodiment, a first cooking step may comprise heating the cooking pot to a temperature of less than 75 °C, for example less than 70 °C, for example about 65 °C. In one embodiment, a first cooking step may comprise heating the cooking pot to a temperature of greater than 65 °C, for example greater than 70 °C, for example about 75 °C. In one embodiment, the first cooking step maybe for a period of less than 10 minutes, for example less than 9 minutes, for example less than 8 minutes, for example less than 7 minutes, for example less than 6 minutes, for example about 5 minutes. In one embodiment, the first cooking step may be for a period of greater than 5 minutes, for example greater than 6 minutes, for example greater than 7 minutes, for example greater than 8 minutes, for example greater than 9 minutes, for example about 10 minutes.

In one embodiment, the second step of a cooking program may comprise heating the cooking pot to a temperature of greater than 75 °C, for example greater than 80 °C, for example greater than 85 °C, for example greater than 90 °C, for example greater than 95 °C, for example to about 100 °C. In one embodiment, the second step of a cooking program may comprise heating the cooking pot to a temperature of less than 100 °C, for example less than 95 °C, for example less than 90 °C, for example less than 85 °C, for example less than 80 °C , for example to about 75 °C. In one embodiment, the first cooking step maybe for a period of greater than 15 minutes, for example greater than 20 minutes, for example greater than 21 minutes, for example greater than 22 minutes, for example greater than 23 minutes, for example greater than 24 minutes, for example greater than 25 minutes, for example about 30 minutes. In one embodiment, the second cooking step maybe for a period of less than 30 minutes, for example less than 25 minutes, for example less than 24 minutes, for example less than 23 minutes, for example less than 22 minutes, for example less than 21 minutes, for example less than 20 minutes, for example about 15 minutes.

As also shown in Figure 1, apparatus 100 further comprises milling tool 112. Milling tool 112 is provided in a cooking pot of the apparatus 100 and is controlled by control unit 102. In one embodiment, control unit 102 controls a motor (not shown) to provide power to milling tool 112. In one embodiment, milling tool 112 is operable to at least partially remove the fibre containing outer layer from starch-containing food such as grains or legumes, to form a mixture of debris from the partially removed fibre containing outer layer and the milled starch-containing food. The milling tool 112 may be rotatable about a drive shaft removably mounted in a lower surface of a lid of the apparatus, such that it is lowered into the cooking pot upon closure of the lid. Alternatively, the drive shaft may extend through a lower surface of the cooking pot. In one example, milling tool 112 and the drive shaft on which it is mounted may be detachably mounted from the apparatus 100. In one example, the position of milling tool 112 within the cooking pot is programmable to be adjustable vertically and horizontally. Thus, in one example, control unit 102 may be operable to control the vertical and horizontal position of milling tool 112 within the cooking pot. In one example, the vertical position of the milling tool 112 may be adjustable by raising or lowering the drive shaft. In another example, the horizontal position of the milling tool 112 within the cooking pot may be adjustable by laterally adjusting the position of the drive shaft within the cooking pot. In this way, it can be guaranteed that all starch-containing food present in the cooking pot is contacted by the milling tool 112 during the milling step.

The operation of the milling tool 112 allows the apparatus to perform the milling step of the methods described herein, to at least partially remove the fibre containing outer layer of the starch-containing food prior to cooking.

In one embodiment, the milling tool 112 maybe operable to be rotated about the drive shaft at a speed of less than 200 rpm. In other words, control unit 102 may control the rotational speed of the milling tool 112. The speed of rotation of the milling tool may depend on whether the starch-containing food (for example grains or legumes) being milled are being milled in a dry condition (i.e. in the absence of water), or in a wet condition (i.e. in the presence of water) as part of a "cake" or slurry. In one embodiment, the rotational speed of the milling tool maybe less than 200 rpm, for example less than 190 rpm, for example less than 180 rpm, for example less than 170 rpm, for example less than 160 rpm, for example less than 150 rpm, for example less than 140 rpm, for example less than 130 rpm, for example less than 120 rpm, for example less than 110 rpm, for example less than 110 rpm, for example about 100 rpm.

In one embodiment, the rotational speed of the milling tool may be greater than 100 rpm, for example greater than 110 rpm, for example greater than 120 rpm, for example greater than 130 rpm, for example greater than 140 rpm, for example greater than 150 rpm, for example greater than 160 rpm, for example greater than 170 rpm, for example greater than 180 rpm, for example greater than 190 rpm, for example about 200 rpm. It will be understood that the rotational speed of the milling tool 112 will depend on whether the starch-containing food is being milled under wet or dry conditions, and the degree of milling required. Generally, a higher rotational speed will lead to a greater degree of milling and removal of the fibre containing outer layer of the starch-containing food. Also a lower rotational speed maybe desirable if the starch-containing food is being milled in a wet condition.

In one embodiment, the control unit 102 may control the speed of rotation of the milling tool as described above for a milling step for a period of at least 30 seconds, for example at least 40 seconds, for example at least 50 seconds, for example at least 60 seconds, for example at least 90 seconds, for example about 2 minutes. In one embodiment, the control unit 102 may control the speed of rotation of the milling tool as described above for a milling step for a period of less than 2 minutes, for example less than 90 seconds, for example less than 60 seconds, for example less than 50 seconds, for example less than 40 seconds, for example about 30 seconds. It will be understood that a longer milling period will result in a greater degree of removal of the fibre containing outer layer from the starch-containing food, while a shorter milling period will result in a lesser degree of removal.

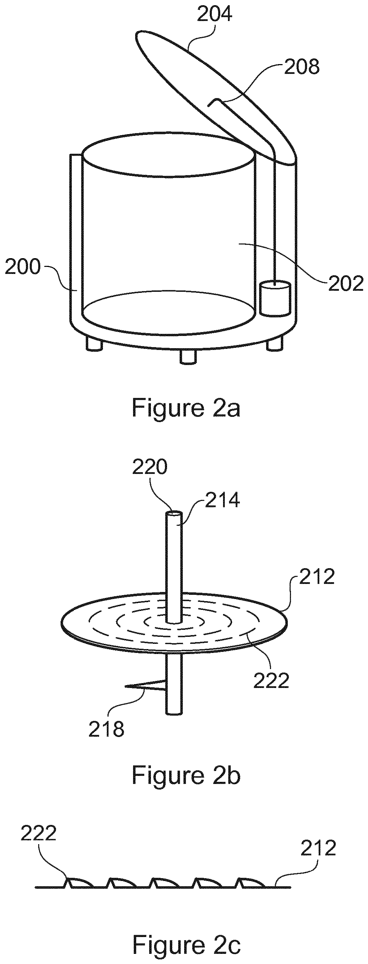

Figure 2a shows an apparatus 200 in accordance with one embodiment. Apparatus 200 is shown as a table-top domestic appliance, such as a rice cooker. Apparatus 200 comprises a cooking pot 202, in which the starch-containing food to be cooked is held, together with water for any of the soaking, milling or cooking steps. Cooking pot 202 is in thermal connection with a heating element (not shown), as discussed above. Apparatus 200 may be under the control of control unit 102 (not shown). Apparatus 202 further comprises a lid 204, which provides a seal with the cooking pot 202 during the methods described. A motor 206 is also provided in apparatus 200, to provide power to the milling tool, which is described in connection with Figure 2b.

Figure 2b shows a milling tool 212 according to embodiments of the apparatus and methods described. Milling tool 212 is provided on a drive shaft 214, which can be detachably mounted onto the underside of lid 204 via connection points 208 and 220. Thus, when drive shaft 214 is mounted via connection points 208 and 220 to the underside of lid 204 and the lid is in the closed position, drive shaft 214 and milling tool 212 are located within the cooking pot 202. In the depicted embodiment, milling tool 212 is shown as a flat plate, but other configurations are also possible, including one or more paddles extending laterally from drive shaft 214. In the embodiment in which the milling tool comprises more than one paddle, the paddles of the more than one paddle may be regularly or irregularly spaced from each other in a horizontal or a vertical orientation. Drive shaft 214 is also provided with a stirring bar 218, extending perpendicularly to the axis of drive shaft 214. Stirring bar 218 maybe in the form of an elongate prong or paddle, and ensures that the starch-containing foods to be milled are continuously in motion against one another and against milling tool 212 during the milling methods described.

In one embodiment, the milling tool 112 comprises a flat plate, or blade. The flat plate or blade may comprise a sharpened edge, or a series of cut out portions with sharpened edges, or a series of raised portions, or any combination thereof, in order to provide surfaces which are useful for milling the starch-containing food. In one embodiment, milling tool 112 comprises one or more, for example a series of, serrations on its surface.

In one embodiment as shown in Figure 2b and Figure 2c, milling tool 212 is provided with a series of serrations 222 projecting from its surface, to abrade the outer layer of the starch-containing foods to be cooked. Other configurations of abrasive feature on milling tool 112, 212 are also possible, such as a roughened surface.

It will be appreciated that Figures 1 and 2 only show the components required to illustrate this aspect of the invention, and in a practical implementation the apparatus 100 or 200 may comprise additional components to those shown. For example, the apparatus 100 or 200 may comprise a battery or other power supply for powering the apparatus 200 or 200 or means for connecting the apparatus 100 or 200 to a mains power supply, as well as the internal mechanism for powering the drive shaft.

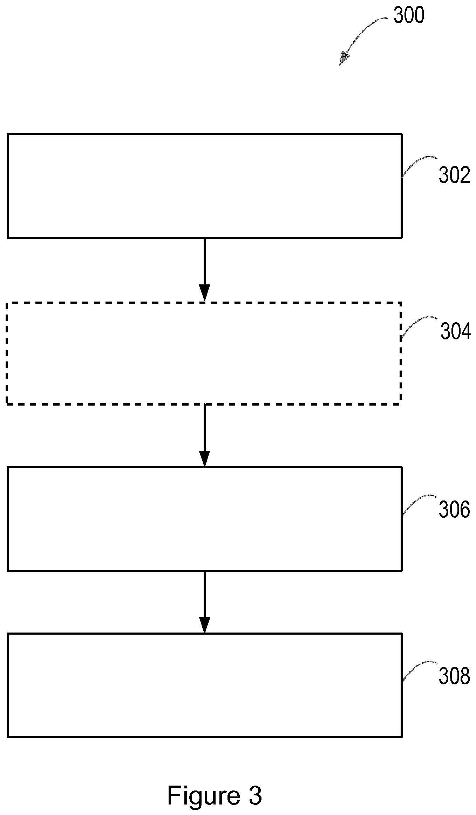

Figure 3 is a flow chart illustrating a method of cooking starch-containing foods according to one embodiment. In the described embodiment, method 300 may be controlled by control unit 102 of apparatus 100, but it will be understood that the method may be controlled separately. In step 302 of method 300, starch-containing foods to be cooked are placed in a cooking pot of an apparatus as described herein. Step 304 comprises an optional soaking step (as denoted by the dashed line), in which the starch-containing foods (such as grains or legumes) are soaked in water at a temperature ranging from ambient temperature to about 60 °C, as discussed previously, to soften the fibre-rich outer layer of the starch-containing food before milling begins. Then, in step 306, the starch-containing food is milled, to at least partially abrade or remove the fibre containing outer layer to form a mixture of debris of the partially removed fibre containing outer layer and milled starch-containing food. For example, in the case of brown rice, the milling step at least partially abrades or removes the fibre-rich bran layer, leaving grains which are partially milled, or partially polished, together with some debris from the fibre-rich bran layer which has been partially removed from the grain. Finally, and without separating any component of the result of the milling step, in step 308 the mixture is then cooked *in situ* in the cooking pot.

The methods described are suited to the preparation and cooking of any starch-containing foods which comprises a fibre containing outer layer. In one embodiment, the starch-containing food comprises grains or legumes. In one embodiment, the methods and apparatus described are useful for cooking grains or legumes selected from brown rice, buckwheat, maize, oats, and soy beans such as red soy beans, green soy beans or black soy beans. All of these foodstuffs are characterized by a starchy central part, encased by an outer layer rich in fibre (and other nutrients).

In a first step 302 of the method 300, the starch-containing food to be cooked is placed in a cooking pot of an embodiment of the apparatus described. The amount of starch-containing food to be cooked depends on the portion size and number of portions to be cooked, and are down to user preferences.

Optionally, water is added to the cooking pot and the starch-containing food is subjected to a step 304 of soaking. As described above, the soaking step may be at a temperature of up to 60 °C, and may be controlled by control unit 102. The soaking step softens the fibre-rich outer layer of the starch-containing food, and thus shortens both the subsequent milling time and cooking time. The soaking step may be carried out at a temperature and for a time as described previously. The soaking step may be carried out with or without gentle stirring from rotation of the milling tool. In the embodiment in which the soaking takes place with gentle stirring, the milling tool maybe rotated at a speed of less than 100 rpm.

Milling step 306 at least partially abrades or removes the fibre-rich outer layer of the starch-containing food, and can be carried out under wet or dry conditions. In the embodiment in which the milling is carried out under wet conditions, this can be realised by adding water to the starch-containing food to be milled. In the embodiment in which the starch-containing food is soaked in water prior to milling, milling may be performed in the same water as was used to soak the starch-containing food. The milling step may be carried out at a temperature, duration and rotational speed of the milling tool as described previously. The speed and duration of the milling step, as well as the temperature, will depend at least in part on whether the starch-containing food has been pre-soaked, is milled in wet or dry conditions, and the degree of milling required. However, as a general rule, the milling step should be such that a mixture of debris of the partially removed fibre containing outer layer of the starch-containing food, and the milled starch-containing food is obtained.

Such a mixture ensures that the nutritional benefits of the fibre-rich outer layer are still available to a person consuming the cooked starch-containing food, in particular grains or legumes, while the palatability of the starch-containing food, in particular the "whole" grain or legume is improved. This is because the partially milled starch-containing food has lost some of the fibre-rich outer layer, i.e. this outer layer has been abraded to an extent that the starchy interior is exposed to the cooking conditions, resulting in the gelatinous texture and taste of a fully processed food which is more appealing in taste. Since the fibre-rich outer layer has been at least partially removed to expose the starchy interior, the cooking time can be reduced, relative to the cooking time had no milling step taken place.

Cooking step 308 takes place immediately after milling step 306 is completed, without any separation of the products obtained from the milling step. In one embodiment, the cooking step comprises a boiling, steaming or braising step in the cooking pot. Whether or not the cooking step comprises a boiling, steaming or braising step will depend at least in part on the volume of water present in the cooking pot. The cooking step 308 may be at a temperature and duration as described previously, and controlled by the control unit 102.

In one embodiment, the milling step 306 takes place under wet conditions, i.e. in the presence of water, and the cooking step 308 is performed in the same water as was used in the milling step 306. In one embodiment, the starch-containing food to be cooked is subjected to a soaking step 302 in water before being milled, and the subsequent milling and cooking steps 306 and 308 are performed in the same water as was used in the initial soaking step 304. In this way, an apparatus as described herein can be controlled in a single program to mill and cook, or soak, mill and cook the starch-containing food without interruption from the user. All the user has to do is place the starch-containing food to be cooked into a cooking pot of the apparatus, along with an amount of water, close the lid (with the milling tool attached), and then program the apparatus to perform all desired steps of the method. Such a program could be a predetermined program, stored in the memory unit of the apparatus.

In an alternative embodiment, the starch-containing food to be cooked are not subjected to a soaking step, and are milled under a dry condition. In this embodiment, the user would need to add water to the cooking pot after the milling step but before the cooking step is initiated, to provide enough moisture to the cooking conditions to ensure that the mixture of partially removed fibre containing outer layer debris and partially milled starch-containing food is cooked without drying out and burning. The amount of water to be added depends at least in part on the nature of the starch-containing food to be cooked, and whether the user wishes to be able to simply serve the cooked mixture, or whether the cooked mixture should be strained of excess cooking liquor and washed before serving. The cooking time and temperature may be controlled by control unit 102 for a duration and temperature as described previously.

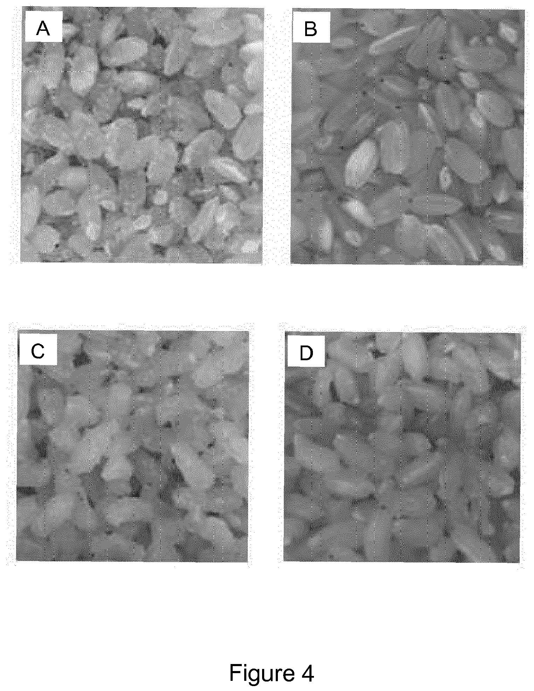

Figure 4 shows photos of partially milled grains of brown rice before (A) and after steaming (C), compared to raw brown rice (B) steamed without milling (D).

The milling conditions to produce the partially milled rice shown in Figure 4A were as follows: Grain-to-water ratio: 1:1.5 (wt./wt.); milling speed: 150 rpm; milling time: 30 second; milling temperature: 25 °C.

Following milling, the partially milled raw brown rice shown in Figure 4A (without any separation step), and the raw brown rice shown in Figure 4B were both subjected to a cooking step as follows: Grain-to-water ratio: 1:1.5 (wt./wt.); cooking time: 30 min; cooking temperature: heat to 65 °C hold for 5 min, and then heat to 100 °C cooking for 25 min.

As can be seen in Figures 4C and 4D, the rice cooked after partial milling is much more gelatinous in appearance than the unmilled brown rice, and is similar in appearance to white, or polished, rice, thus providing the nutritional benefit of the bran layer while having the desirable taste and texture of white rice.

There is also provided a computer program product comprising a computer readable medium, the computer readable medium having computer readable code embodied therein, the computer readable code being configured such that, on execution by a suitable computer or processor, the computer or processor is caused to perform the method or methods described herein, for example on the apparatus also described herein.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method (300) of cooking starch-containing food comprising:
milling (306) starch-containing food having a fibre containing outer layer to at least partially remove the fibre containing outer layer from the starch-containing food to form a mixture of debris from the at least partially removed fibre containing outer layer and the milled starch-containing food; and
cooking (308) the mixture of debris from the at least partially removed fibre containing outer layer and the milled starch-containing food.

2. The method (300) of claim 1, further comprising a soaking step in which the starch-containing food is soaked (304) in water prior to the milling step (306).

3. The method (300) of claim 1 or 2, wherein the starch-containing food comprises grains or legumes.

4. The method (300) of any one of claims 1 to 3, wherein the method is performed in a cooking apparatus (100, 200).

5. The method (300) of claim 4, wherein the milling step is implemented by a milling tool (112, 212) comprised in the cooking apparatus (100, 200).

6. The method (300) of claim 5, wherein the milling step comprises rotating the milling tool (112, 212) about a drive shaft (214) of the cooking apparatus at a speed of less than 200 rpm.

7. The method (300) of any one of claims 4 to 6, wherein the cooking apparatus (100, 200) comprises a cooking pot (202) in which the mixture of debris from the at least partially removed fibre containing outer layer and milled starch-containing food is formed and cooked.

8. The method (300) of any one of the preceding claims, wherein cooking (308) the mixture of debris from the at least partially removed fibre containing outer layer and milled starch-containing food comprises one or more of steaming, boiling or braising.

9. The method (300) of any one of claims 2 to 8, wherein the steps of milling (306) and cooking (308) are carried out in the same water in which the starch-containing food was soaked (304).

10. An apparatus (100, 200) for cooking starch-containing food, comprising:
a cooking pot (202); and
a milling tool (112, 212) provided in the cooking pot (202), the milling tool (112, 212) being operative to at least partially remove a fibre containing outer layer from starch-containing food and form a mixture of debris from the at least partially removed fibre containing outer layer and milled starch-containing food;
wherein the apparatus (100, 200) is configured to form and cook the mixture of debris from the at least partially removed fibre containing outer layer and milled starch-containing food in the cooking pot (202).

11. The apparatus (100, 200) of claim 10, wherein the milling tool (112, 212) is rotatable about a drive shaft (214).

12. The apparatus (100, 200) of claim 10 or 11, wherein the milling tool (112, 212) position within the cooking pot (202) is adjustable vertically and/or horizontally.

13. The apparatus (100, 200) of any one of claims 10 to 12, wherein the milling tool (112, 212) comprises a flat plate or a blade.

14. The apparatus (100, 200) of any one of claims 10 to 13, further comprising a control unit (102) for controlling one or more of the following operational parameters:
soaking time;
soaking temperature;
rotational speed of the milling tool;
milling time;
vertical and horizontal movement of the milling tool;
cooking time;
cooking temperature.

15. A computer program product comprising a computer readable medium having computer readable code embodied therein, the computer readable code being configured such that, on execution by a control unit of a cooking apparatus configured to form and cook a mixture of debris from an at least partially removed fibre containing outer layer and milled starch-containing food from starch-containing food having a fibre containing outer layer in a cooking pot of the cooking apparatus, the control unit is caused to perform the method of any of claims 1 to 9.
